# EUROPEAN PATENT APPLICATION

(11) **EP 4 650 033 A1**
(43) Date of publication of application: **19.11.2025**
(21) Application number: 24175670.9
(22) Date of filing: 14.05.2024
(51) Int. Cl.: B01D 53/14

(54) **CARBON CAPTURE**

(71) Applicant: Infineum International Limited, Abingdon, Oxfordshire OX13 6BB (GB)
(72) Inventor: Scott, Robin, Abingdon, OX13 6BD (GB); Greer, Adam, Abingdon, OX13 6BD (GB); Hollingsworth, Nathan, Abingdon, OX13 6BD (GB); Coultas, David, Abingdon, OX13 6BD (GB)
(74) Representative: Pedley, Michael Ewan

(57) **Abstract**

Methods, processes, compositions, systems and uses for separating acidic gases such as carbon dioxide from a gaseous mixture containing such acidic gases, utilising a dispersion of at least one organic base comprising at least two aminic functional groups and a base oil, the dispersion further comprising at least one surfactant being the reaction product of a polyolefin succinic acid and/or polyolefin succinic anhydride with an organic amine comprising at least two aminic functional groups.

## Description

This invention relates to methods, processes, compositions, systems and uses relating to the separation of acidic gases from a gaseous mixture. In particular, the invention relates to methods, processes, compositions, systems and uses for the separation of sulphur dioxide, nitrogenous oxides (especially nitrogen dioxide) and/or carbon dioxide, and preferably carbon dioxide, from a gaseous mixture containing sulphur dioxide, nitrogenous oxides (especially nitrogen dioxide) and/or carbon dioxide, and preferably carbon dioxide, such as that formed during the combustion of fossil fuels, production of cement, production of steel, oil and/or natural gas refinery processes, and/or other industrial processes.

### Background of the Invention

The removal of carbon dioxide (CO₂) and other acidic gases from gaseous mixtures is of increasing industrial importance. Carbon dioxide is the inevitable by-product of the combustion of fossil fuels such as gas, coal, and oil. It is also generated in many other industrial processes, for example during the manufacture of cement. The adverse effects caused by the release of CO₂ into the atmosphere have been identified for many years and governments and international organisations around the world have recognised a need to reduce CO₂ emissions as part of mitigation against global warming. International agreements such as the 2016 Paris Agreement set goals aimed at significantly reducing CO₂ emissions from all sources and individual countries and industries have since adopted 'net-zero' targets whereby CO₂ emissions are to be removed or abated entirely. These are ambitious targets but there is a broad consensus that action should be taken to avoid an irreversible and catastrophic damage from climate change.

The Inter-governmental Panel on Climate Change (IPCC) estimates that more than three-quarters of global CO₂ emissions are attributable to the burning of fossil fuels for power (electricity) generation. The majority of the remainder can be attributed to industrial processes including cement manufacture, refinery operations, iron and steel manufacturing and the petrochemical industry. Methods able to remove or capture CO₂ from these sources, and from other processes where CO₂ is present or produced, would thus be of significant benefit to efforts to reduce atmospheric CO₂ and so ameliorate global warming. In processes in which CO₂ is present, for example in which CO₂ is emitted or produced, other acidic gases may also be present. Gases such as sulphur oxides, nitrogen oxides and hydrogen sulphide are also considered detrimental to the atmosphere and to public health and so methods for the removal or capture of these gases too would be of significant benefit.

Techniques for the absorption of CO₂ using liquid absorbents are known in the art. Most commonly, liquid amine absorbents such as alkanolamines dissolved in water are used. CO₂-containing gas streams are contacted with the absorbent where the CO₂ reacts with the amine to produce carbamate, carbonate and bicarbonate species, thereby trapping the CO₂ by chemical means. The ammonium salts that form are thermally unstable so in a secondary stage, it is possible to liberate the captured CO₂ by heating and thus regenerate the liquid amine absorbent. The process is thus cyclic allowing repeated use of the same liquid absorbent. Common amines used in aqueous solution include monoethanolamine (MEA), diethanolamine (DEA), methyldiethanolamine (MDEA) and triethanolamine (TEA), 2-Amino-2-methyl-1-propanol (AMP) and piperazine (PZ). The CO₂ liberated through the thermal decomposition of the species formed can be collected and either employed in other processes (termed "utilisation") or it may be removed from the atmosphere altogether, for example by pumping into disused oilwells, mines or other underground structures (termed "storage"). The cyclic process thus enables the effective removal of CO₂ from CO₂-containing gas streams. This is often referred to as Carbon Capture and Storage (CCS) or Carbon Capture, Utilisation and Storage (CCUS).

Although effective, there are several drawbacks with the use of aqueous amine solutions as liquid absorbents for CCS/CCUS operations. One main drawback is the amount of energy needed. In part due to the volatility of water, the absorption of CO₂ proceeds at a relatively low temperature such as from ambient temperature up to about 50 °C. This needs to be increased significantly such that the vapour-liquid equilibrium drives the CO₂-absorbed ammonium species to thermally decompose and so liberate CO₂ (for example, typically this may require raising the temperature to above 100 °C, which in the case of aqueous solutions results in significant water vaporisation, even at elevated pressure, which consumes significant energy that is difficult to recover). The carbon capture process employs large volumes of the liquid absorbent and so the amount of energy needed to maintain the required temperature is also large, mainly owing to the relatively high specific heat capacity of water (4.2 kJ kg⁻¹ K⁻¹) and specific enthalpy of vaporisation (2260 kJ kg⁻¹ @ 100 °C). The use of water also gives rise to corrosion problems which may require engineering mitigation, such as the selection of construction materials. It would thus be highly advantageous to be able to reduce the amount of energy required in a cyclic CCS/CCUS process, and mitigate or solve other problems therewith.

US 9,713,788 attempts to address the challenges associated with the use of aqueous absorbent solutions by instead employing either a liquid amine alone or an amine dissolved in an aprotic solvent. Examples of amines used include some of those mentioned hereinabove as well as compounds such as 1,5-diamino-3-oxapentane (DAOP), aminopropionitrile (APN), 2-ethoxyethylamine (2EEA), 1,5-bis(methylamino)-3-oxapentane (BMAP), and polyethyleneimine (PEI); and examples of aprotic solvents used include dimethylsulphoxide (DMSO). However, such approaches require the selection of amines which can be dissolved in such aprotic solvents and may not be as effective as other options. The purported improvements may also be eroded through the environmental sustainability, handling considerations and cost of the aprotic solvents, which also need to be made available in large quantities. J. Applied Membrane Science and Technology, Vol.26, No. 2, August 2022, 17-27 attempts to prepare colloidal water-and-amine in oil compositions using mixtures of methyldiethanolamine and 2-amino-2-methyl-1-propanol with a sorbitan monooleate surfactant. However, these have only achieved an active amine loading of 8% v/v, below the level that would be needed to provide an industrially acceptable absorbent solution (around 30% amine in water). Accordingly, there remains a need for acid gas separation and carbon capture methods and processes that can overcome the above problems and in particular methods and processes that offer improved alternatives to aqueous amine solutions.

### Summary of the Invention

Surprisingly, it has now been found that a separation composition comprising an amine dispersed in a nonaqueous solvent (an oleaginous fluid or base oil), stabilized with a surfactant, can achieve a high degree of acidic gas separation, and avoid many of the main drawbacks of aqueous amine systems. Using a non-aqueous solvent of higher initial boiling point and lower specific heat capacity compared with water may reduce volatile solvent losses, especially during the higher temperature decomposition stage necessary for solvent regeneration, and thus reduces the energy input required of the whole process. The non-volatile solvent also allows for significantly higher temperature to be used for desorbing acidic gases separated utilising the methods, processes, compositions, systems and uses of the present invention, thus further improving the overall efficiency of the process by mitigating irretrievable energy loss to evaporation. In addition, using a surfactant stabilised amine dispersion may reduce volatile losses of the amine itself, thus reducing the requirement for emissions aftertreatment and increasing the service life of the active amine in the solvent.

The present invention therefore provides methods and processes for separating acidic gases, such as (and in particular) carbon dioxide (CO₂) from a gaseous mixture which use considerably less energy than established methods employing aqueous absorbent solutions, enabling a more efficient cyclic CCS/CCUS procedure to be established, while also mitigating the other problems associated with existing non-aqueous solvents.

Accordingly, in a first aspect the present invention provides methods of at least partially separating one or more acidic gases from a gaseous mixture containing such acidic gases, the methods comprising contacting the gaseous mixture with a dispersion of at least one organic base and a base oil, the dispersion further comprising at least one surfactant, wherein the surfactant comprises or consists of the reaction product of a polyolefin succinic acid and/or polyolefin succinic anhydride with at least one organic amine comprising at least two aminic functional groups; wherein the organic base comprises at least two aminic functional groups; and wherein the organic amine and the organic base may be the same or different.

In a second aspect, the present invention provides processes for at least partially separating one or more acidic gases from a gaseous mixture comprising such acidic gases, the processes comprising the steps of: providing, charging or loading a vessel with a composition comprising a dispersion of at least one organic base and a base oil, the dispersion further comprising at least one surfactant; and introducing the gaseous mixture to the vessel, wherein the surfactant comprises or consists of the reaction product of a polyolefin succinic acid and/or polyolefin succinic anhydride with at least one organic amine comprising at least two aminic functional groups; wherein the organic base comprises at least two aminic functional groups; and wherein the organic amine and the organic base may be the same or different.

In a third aspect, the present invention provides compositions for at least partially separating one or more acidic gases from a gaseous mixture comprising such acidic gases, the compositions comprising a dispersion of at least one labile organic base in a base oil, the dispersion further comprising at least one surfactant, wherein the surfactant comprises or consists of the reaction product of a polyolefin succinic acid and/or polyolefin succinic anhydride with at least one organic amine comprising at least two aminic functional groups; wherein the organic base comprises at least two aminic functional groups; and wherein the organic amine and the organic base may be the same or different.

In a fourth aspect, the present invention provides acidic gas separation systems, being systems for at least partially separating one or more acidic gases from a gaseous mixture comprising such acidic gases, the systems comprising a vessel with means for fluid introduction and removal, wherein the vessel contains a composition according to the third aspect of the invention.

In a fifth aspect, the present invention provides uses of a composition comprising a dispersion of at least one organic base and a base oil, the composition further comprising at least one surfactant, wherein the surfactant comprises or consists of the reaction product of a polyolefin succinic acid and/or polyolefin succinic anhydride with at least one organic amine comprising at least two aminic functional groups; wherein the organic base comprises at least two aminic functional groups; and wherein the organic amine and the organic base may be the same or different, to at least partially separate one or more acidic gases from a gaseous mixture containing such acidic gases and/or to at least partially capture carbon dioxide from a gaseous mixture comprising carbon dioxide.

As introduced above, employing an oleaginous fluid (also referred to as an oil or base oil) rather than an aqueous fluid such as water permits significant energy savings when one or more aspects of the present invention form part of a cyclic CCS undertaking. This is in part because the specific heat capacity of oleaginous fluids is lower than that of water. For example, a base oil of the type conventionally used as a lubricating oil typically has a specific heat capacity of about 2.0 kJ kg⁻¹ K⁻¹. This is less than half of the specific heat capacity of water of about 4.2 kJ kg⁻¹ K⁻¹, so the amount of energy required to maintain the required temperature differential for both capture and release of acidic gases is markedly lower. Notably, an oleaginous fluid may provide improved resilience of the acidic gas (especially carbon dioxide) separation composition to hotter gaseous mixtures, such as flue gases or exhaust gases, meaning that less energy needs to be expended to cool the gaseous mixture before introducing it to an acidic gas separation process, and less energy is required to heat the composition following separation of acidic gas separation composition to a temperature at which the acidic gas (especially carbon dioxide) is released from the acidic gas separation composition.

### Brief Description of the Drawings

FIGURE 1 shows a schematic representation of an apparatus or system suitable for the compositions, processes, methods and uses described in accordance with the present invention, or as the systems described in accordance with the present invention.
FIGURE 2 shows a graph of carbon dioxide loading achieved (in grams of CO₂ per gram of solvent) against organic base concentration for examples of the present invention.
FIGURE 3 shows a graph of carbon dioxide loading achieved (in moles of CO₂ per mole of solvent) against organic base concentration for examples of the present invention.

### Detailed Description of the Invention

Compositions referred in accordance with any aspect of the present invention comprise a dispersion of at least one organic base and a base oil, the dispersion further comprising at least one surfactant. Accordingly, the compositions present in accordance with any aspect of the invention may comprise a dispersion of at least one organic base in a base oil, the dispersion further comprising at least one surfactant. As used herein, the term "dispersion" means a chemical system in which particles, in any state of matter, are distributed in another material of the same or different state of matter to the particles. The continuous phase (or external phase) is typically a liquid and the discontinuous phase (or internal phase), formed by the particles, is typically a liquid, a solid or a semi-solid, such as a gel or sol. The dispersion may therefore be a liquid-in-liquid dispersion and may therefore be alternatively described as an emulsion. An emulsion may be formed by using a liquid organic base or by using an organic base solubilised in a hydrophilic medium, such as an aqueous organic base. An organic base solubilised in a hydrophilic medium, or an aqueous organic base may be notably applied where the organic base is solid in standard conditions.

Many dispersions ordinarily exhibit stability for a finite period of time. Dispersion stability may be assessed by placing a 100 mL sample in a 100 mL borosilicate glass centrifuge tube, for example a conical bottom tube of length 203mm and neck ID 17mm, SKU 1197102. Two samples are taken, one sample taken from a position 1 cm from the top and another taken from a position 1 cm from the bottom, using a syringe, and analysed for total nitrogen content using ASTM D5291-21 test method D. This method is calibrated using commercially available standards defined in the test method to enable measurement of nitrogen in the range of interest. Herein, acetanilide was used to calibrate for nitrogen content up to 10.36% by mass, and imidazole to calibrate up to 41.15% by mass. The top and bottom nitrogen determinations are compared using the Reproducibility statement for test method D which states that the difference between two nitrogen determinations from the same sample should be no more than 0.02967 (X + 3) where X is the average of the two samples. Preferably, if the top and bottom nitrogen determinations agree to within five times the Reproducibility statement of the test method, the dispersion is deemed to remain stable at the point in time at which the samples were taken, more preferably the top and bottom nitrogen determinations agree to within four times the Reproducibility statement of the test method, even more preferably to within three times the Reproducibility statement of the test method, even more preferably still twice (double) the Reproducibility statement of the test method and yet further preferably the top and bottom nitrogen determinations agree to within the Reproducibility statement of the test method. In preferred embodiments, the dispersion is stable (and may be measured in accordance with the method described above) for at least about 24 hours (or about 1 day), preferably for at least about 48 hours (or about 2 days), more preferably for at least about 1 (one) week, even more preferably for about 4 (four) weeks and even more preferably still stable for about 12 (twelve) weeks, as defined above. While it is preferred and understood that no upper limit on stability exists, examples include about 15 weeks; about 20 weeks; about 25 weeks; about 30 weeks; about 40 weeks; about 50 weeks; about 1 year; about 2 years; about 3 years; about 5 years; about 10 years; up until utilisation in a method, process, system, or use in accordance with the present invention; and indefinitely. Accordingly, the stability of the dispersion may be from about 24 hours (or 1 day) to about 15 weeks, about 24 hours (or 1 day) to about 20 weeks, about 24 hours (or 1 day) to about 25 weeks and so on, about 48 hours (or 2 days) to about 15 weeks, about 48 hours (or 2 days) to about 20 weeks, and so on; and also so on for each lower and upper limit provided above.

### Base oil

In respect of compositions relating to any aspect of the present invention, the oil (which may be described as a base oil or as an oleaginous fluid) typically forms the continuous phase (also known as the external phase) of the dispersion or composition. Accordingly, the base oil would ordinarily be present in a significant amount, that is to say in an amount of from about 10% to about 90%, preferably from about 20% to about 80%, more preferably from about 30% to about 70%, even more preferably from about 40% to about 60% and even more preferably still from about 45% to about 55%, in each case by mass of the base oil.

The base oil may be any liquid oleaginous medium or oleaginous fluid (also known as oleaginous liquid) and may alternatively be described in general as a liquid hydrophobic medium or hydrophobic fluid (also known as hydrophobic liquid). Accordingly, the base oil (or the molecules thereof) would typically consist of carbon atoms, hydrogen atoms and less than about 2% heteroatoms, preferably less than about 1% heteroatoms, more preferably less than about 0.5% heteroatoms, even more preferably less than about 0.2% heteroatoms and even more preferably still less than about 0.1% heteroatoms, on a mass basis. In each case there may be a lower limit of zero, substantially zero (e.g. below the limit of detection), or only trace amounts of heteroatoms. The base oil may therefore include organic solvents such as hydrocarbon solvents, mineral oils, lubricant base stocks or other organic or hydrocarbonaceous (or predominantly hydrocarbonaceous) fluids, especially those meeting the definition of carbon atom, hydrogen atom and heteroatom contents above. Preferably the base oil will be non-volatile under the conditions of acidic gas separation and release. Volatility may be determined by the initial boiling point (IBP) of the liquid, as measured by ASTM 7500. Some preferred IBP temperatures for the base oil may therefore be at least about 100°C, preferably at least about 120°C, more preferably at least about 140°C and more preferably still at least about 160°C.

The base oil is also preferably non-polar, substantially non-polar, or of low polarity. The base oil may therefore be selected so that the solubility of the organic base in the base oil may be not greater than about 5 percent mass/mass (% m/m), preferably not greater than about 2% m/m, more preferably not greater than about 1% m/m, even more preferably not greater than about 0.5% m/m and even more preferably still not greater than about 0.1% m/m, measured under standard conditions.

The base oil may be comprised of one or more base stocks. That is to say, the base oil may be a single base stock or may comprise a mixture of base stocks. As defined by the American Petroleum Institute (API), a base stock is a lubricant component that is produced by a single manufacturer to the same specifications (independent of feed source or manufacturer's location); that meets the same manufacturer's specification; and that is identified by a unique formula, product identification number, or both. Base stocks may be manufactured using a variety of different processes including but not limited to distillation, solvent refining, hydrogen processing, oligomerization, esterification, and rerefining. Rerefined stock shall be substantially free from materials introduced through manufacturing, contamination, or previous use. Non-limiting examples of base stocks that may be used in or as the base oil include ExxonMobil AP/E CORE 100 / 150, ExxonMobil EHC 45 / 50 / 65 / 110, Chevron 100R, Yubase 2 / 4, and ExxonMobil Spectrasyn 2/4.

In some preferred embodiments, the base oil may comprise or consist of Group I base stock, Group II base stock, Group III base stock, Group IV base stock or mixtures thereof, as defined in accordance with the API base stock classification system, as defined in Annex E of API 1509-2022, base oil interchangeability guidelines for passenger car motor oils and diesel engine oils. This system is described in Table 1 below, in which percentages given are mass percent.

**TABLE 1: API Base Stock Classification System**

| Group | Viscosity Index (x) | Saturates Content | | Sulphur Content | Notes |
|---|---|---|---|---|---|
| I | 80 ≤ x < 120 | < 90 % | and/or | > 0.03% | |
| II | 80 ≤ x < 120 | ≥ 90 % | and | ≤ 0.03% | |
| III | x ≥ 120 | ≥ 90 % | and | ≤ 0.03% | |
| IV | Not specified | | Not specified | | All Poly Alpha Olefins (PAO) |
| V | Not specified | | Not specified | | All other base stocks |

For the purposes of classifying a base stock, viscosity index may be measured according to ASTM D2270, saturates content may be measured according to ASTM D2007 and sulphur content may be measured according to one of ASTM D1552, D2622, D3120, D4294 and/or D4927. In each case, the API classification indicates that the most recent version of each standard shall be used. As such, ASTM D2270-10(2016) may be used to measure the viscosity index of a base stock, ASTM D2007-19(2020) may be used to measure the saturates content of a base stock and any of ASTM D1552-16(2021), D2622-21, D3120-08(2019), D4294-21, or D4927-20 may be used to measure the sulphur content of a base stock. The base stock(s) forming the base oil may be new (including synthetic), reused, rerefined or recycled base stocks.

In order to improve the energy efficiency of heating required to facilitate the acidic gas separation and release processes, a lower specific heat capacity of the base oil is desirable. In some preferred embodiments, the specific heat capacity of the base oil (or the separation composition) is accordingly less than about 4.2 kJ kg⁻¹ K⁻¹, preferably less than about 4.0 kJ kg⁻¹ K⁻¹, more preferably less than about 3.5 kJ kg⁻¹ K⁻¹, even more preferably less than about 3.0 kJ kg⁻¹ K⁻¹, such as, by way of non-limiting example, from about 1.0 kJ kg⁻¹ K⁻¹ to about 3.0 kJ kg⁻¹ K⁻¹, from about 1.5 kJ kg⁻¹ K⁻¹ to about 2.5 kJ kg⁻¹ K⁻¹ or from about 1.75 kJ kg⁻¹ K⁻¹ to about 2.25 kJ kg⁻¹ K⁻¹.

### Organic base

In respect of compositions relating to any aspect of the present invention, an organic base typically forms the discontinuous phase (also known as internal phase or dispersed phase) of the composition. Any suitable organic base as further described herein that is not miscible with the base oil may be employed in the present invention. As used herein, the term "not miscible" means that not greater than about 5 percent mass/mass (% m/m) of the organic base dissolves in the base oil, preferably not greater than about 2% m/m, more preferably not greater than about 1% m/m, even more preferably not greater than about 0.5% m/m and even more preferably still not greater than about 0.1% m/m, each measured under standard conditions.

Additionally or alternatively, the organic base may have a solubility in water under standard conditions of at least about 50 percent mass/mass (% m/m), preferably at least about 70% m/m, more preferably at least about 90% m/m, each measured under standard conditions.

The organic base contains two or more aminic functional groups, optionally in addition to one or more heteroatoms. As used herein, aminic functional groups may be alternatively described as amine functional groups, aminic groups, amine groups or nitrogen atoms. Accordingly, by way of non-limiting example, the two or more aminic functional groups may be alternatively described as two or more amine functional groups, two or more aminic groups, two or more amine groups or two or more nitrogen atoms. Examples of the organic base include those with primary amine functionality, secondary amine functionality and/or tertiary amine functionality, which may be described as primary amines, secondary amines and tertiary amines. For example, the organic base may contain amine functionality selected from primary amine functionality, secondary amine functionality, tertiary amine functionality, both primary and secondary amine functionality, both primary and tertiary amine functionality, both secondary and tertiary amine functionality or the combination of primary, secondary and tertiary amine functionality.

The organic bases may be aliphatic, cycloaliphatic, aromatic, or heterocyclic amines.

Examples of organic bases include 4-piperadinamine, 1-(Aminomethyl)piperidine, 4-(Aminomethyl)piperidine, 1-Aminoethylpiperidine, 4-Aminoethylpiperidine, 4-Amino-1-piperidineethanol, etc., 2-Morpholinoethylamine, 2-Morpholinopropylamine, etc., Piperazine (PZ) and its derivatives such as 1-(2-aminoethyl)piperazine (AEP), 1,4-piperazine diethanamine, 2-Piperazineethanamine, 1-Methylpiperazine, 2-Methylpiperazine, 1,4-Dimethylpiperazine, 2,5-Dimethylpiperazine, 1-Ethylpiperazine, 2-Ethylpiperazine, 1,4-Diethylepiperazine, 1,4-Dimethanaminepiperazine etc and alkyl alcohol derivatives of piperazine including 1-(2-hydroxyethyl)piperazine (HEP), 1,4-Piperazinediethanol, 2-Piperazineethanol, 1-Piperazinepropanol, etc., Ethylenediamine (EDA); Diethylenetriamine (DETA), which as used herein includes without limitation, linear DETA and all cyclic and/or branched ethylene amines containing 3 aminic groups per molecule; Triethylenetetramine (TETA), which as used herein includes without limitation, linear TETA and all cyclic and/or branched ethylene amines containing 4 aminic groups per molecule; Tetraethylenepentamine (TEPA), which as used herein includes without limitation, linear TEPA and all cyclic and/or branched ethylene amines containing 5 aminic groups per molecule; Pentaethylenehexamine (PEHA), which as used herein includes without limitation, linear PEHA and all cyclic and/or branched ethylene amines containing 6 aminic groups per molecule; Hexaethyleneheptamine (HEHA), which as used herein includes without limitation, linear HEHA and all cyclic and/or branched ethylene amines containing 7 aminic groups per molecule, and so on (including by way of non-limiting example higher ethylene amines such as those with 8, 9, 10, 11, 12, 13, 14, 15 or more aminic groups); and their polyolefin amine analogues (including without limitation polypropylene amine analogues, polybutylene amine analogues, polypentylene amine analogues, polyhexylene amine analogues, etc. and so on); Propylene diamine, 1,3-propanediamine, Dipropylenetriamine, Butylenediamine, Isobutylene diamine, 1,3-butane diamine, 1,4-Butane diamine, Dibutylenetriamine, Tetramethyl-1,3-propanediamine, Tetraethyl-1,3-propanediamine, 1,5-Pentanediamine, 1,6-Hexanediamine, 1,7-Heptanediamine, etc. and so on; and Polyethyleneimine (PEI) (of any molecular weight, which may be either linear or branched and is preferably branched); Homopiperazine, 1,3-Diamino-2-propanol, (2-Hydroxyethyl)ethylenediamine, Tris(2-aminoethyl)amine, N-Methyl-1,3-propanediamine, 2,2-Dimethyl-1,3-propanediamine, N,N-Dimethyl-1,3-propanediamine, N,N,N',N'-Tetramethylethylenediamine, N,N,N',N'-Tetraethylethylenediamine, N-Cyclohexyl-1,3-propanediamine, Hexahydro-2,4,6-trimethyl-1,3,5-triazine, imidazole, 1,4-diazabicyclo[2.2.2]octane (Dabco), 2,2'-(1,2-Ethanediyldiimino)bis[ethanol], 1,4-Diaminocyclohexane, Guanidine, 1,1,3,3-Tetramethylguanidine, Bis(dimethylaminoethyl) ether, Triethylethylenediamine, 1,2,3-Triazole, 1H-1,2,4-Triazole, 3-Amino-1H-1,2,4-Triazole, 1-Methylimidazole, 1H-Pyrazol-3-amine, 2-Pyridinemethanamine, 2-Pyridineethanamine, 4-Aminopyridine, N2-[2-(Dimethylamino)ethyl]-N1,N1-dimethyl-1,2-ethanediamine, N,N-Diethyl-1,3-propanediamine, N1-Methyl-N2-[2-(methylamino)ethyl]-1,2-ethanediamine, 1,3,5-Triazine, 1,3,5-Trimethylhexahydro-1,3,5-triazine, 1,3,5-Triethylhexahydro-1,3,5-triazine, Melamine, o-Phenylenediamine, m- Phenylenediamine, p-Phenylenediamine, etc., and mixtures of such amines.

An important class of organic base are polyamines (which as used herein includes without limitation distributions of linear, branched and/or cyclic alkylene derivatives containing a modal number (n) of aminic functional groups), such as polyamines derived from alkylenes. Polyamines derived from ethylene are preferred for reasons of commercial availability. A detailed description of the preparation and properties of polyamines is contained within the chapter "Diamines and Higher Amines, Aliphatic", Second Edition, Kirk and Othmer, Volume 8, pages 485-519, published by Wiley 2001, the disclosure of which is herein incorporated by reference. Polyamine mixtures are often prepared by the reaction of alkylene (e.g. ethylene) chloride with ammonia or by reaction of an alkylene (e.g. ethylene) imine with ammonia. The resulting product is typically a complex mixture of alkylene (e.g. ethylene) derived polyamines. The polyamine mixture can be separated by fractional distillation to yield fractions, with n typically ranging from about 2 to about 14. Ethylene derived polyamine mixtures can be separated by fractional distillation to yield lighter fractions, with n typically about 2 to about 5, an intermediate mixed fraction commercially referred to as polyamine (PAM) with n typically about 6, and a heavier fraction known commercially as heavy polyamine (H-PAM) with n typically about 7 or higher. The lighter ethylene derived polyamines (such as DETA, TETA, TEPA, etc.) can be used in accordance with the present invention, as well as the heavier PAM and H-PAM mixtures, each separately or in combination. The properties and attributes of polyalkyl polyamines are further described, for example, in U.S. Pat. Nos. 4,938,881; 4,927,551; 5,230,714; 5,241,003; 5,565,128; 5,756,431; 5,792,730; and 5,854,186, the disclosures of each of which are herein incorporated by reference. By way of non-limiting example, a commercially available product containing over 95% TEPA, having structures as previously described, is available from both Huntsman Corporation and Delamine B.V. and is marketed as Tetraethylenepentamine, or simply TEPA. A commercially available PAM typically containing over 90% PEHA, having structures as previously described, and heavier polyamine analogues is also available from Huntsman Corporation under the commercial name "Ethyleneamine E-100", and from Delamine B.V. under the commercial name "HEPA (higher ethylene polyamines)". A commercially available H-PAM typically containing over 95% polyamines heavier than or equal to PEHA, with less than 15% PEHA itself, having structures as previously described, is available from Delamine B.V. under the commercial name "HEPA 5140".

The organic base may be, or comprise, an amine which may contain additional functional groups such as alcohol or amide groups, or mixtures thereof. Useful amine compounds according to the invention comprise at least two amine groups and can also comprise one or more additional amine groups or other reactive or polar groups. These amines may be hydrocarbyl amines or may be predominantly hydrocarbyl amines in which the hydrocarbyl group includes other groups, e.g., hydroxy groups, alkoxy groups, amide groups, nitriles, carbonyls, imidazoline groups, and the like. Suitable hydrocarbyl amines include aryl, cycloalkyl and alkylamines. The amine compounds may have, or have on average, a ratio of carbon atoms to heteroatoms of from about 10:1 to about 1:2, preferably from about 5:1 to about 2:3, more preferably from about 3:1 to about 2:3, even more preferably from about 2:1 to about 1:1 and even more preferably still from about 3:2 to about 1:1. In combination with any of the ranges for the ratio of carbon atoms to heteroatoms above, the heteroatoms used for the purpose of determining said ratio are preferably selected from nitrogen and oxygen, more preferably nitrogen.

The organic base comprises primary, secondary, tertiary, or mixed order amine functionality. Preferred organic bases include those selected from Piperazine, 1-(2-aminoethyl)piperazine (AEP), 2-Piperazineethanamine, Tris(2-aminoethyl)amine, 1-(2-hydroxyethyl)piperazine (HEP), 1,3-Diamino-2-propanol, Triethylenetetramine (TETA); Tetraethylenepentamine (TEPA); Pentaethylenehexamine (PEHA); Hexaethyleneheptamine (HEHA); PAM; H-PAM or mixtures of such organic bases, and more preferable organic bases include those selected from Piperazine, 1-(2-aminoethyl)piperazine (AEP), Tetraethylenepentamine (TEPA); PAM; H-PAM or mixtures of such organic bases.

### Surfactant

The surfactant may also be described as an emulsifier and/or as a dispersant. A dispersant is an additive whose primary function is to hold oil-insoluble substances in suspension (in other words, a dispersant holds oil-insoluble substances in dispersion). For example, a dispersant maintains in suspension oil-insoluble substances, such as oil-insoluble components and in the context of the present invention, the organic base, thus preventing or reducing flocculation and resultant precipitation or deposition on surfaces. Dispersants typically comprise a long hydrocarbon chain with a polar head, the polarity being derived from the inclusion of heteroatoms, preferably heteroatoms covalently bonded to the hydrocarbon chain, and more preferably oxygen or nitrogen atoms. The surfactant of the present invention comprises or consists of the reaction product of a polyolefin succinic acid and/or polyolefin succinic anhydride with an organic amine, wherein the organic amine comprises at least two amine functional groups, optionally in addition to one or more heteroatoms. As used herein, aminic functional groups may be alternatively described as amine functional groups, aminic groups, amine groups or nitrogen atoms. Accordingly, by way of non-limiting example, the two or more aminic functional groups may be alternatively described as two or more amine functional groups, two or more aminic groups, two or more amine groups or two or more nitrogen atoms. Typically the organic amine contains at least one primary amine group, or at least one secondary amine group, or at least one hydroxyl functional group, or combinations thereof. Within the surfactant described in accordance with the present invention, the hydrocarbon chain is an oleophilic group that confers oil-solubility to the surfactant and has, for example, a molecular weight of about 200 g/mol to about 50000 g/mol, about 300 g/mol to about 40000 g/mol, about 400 g/mol to about 30000 g/mol, about 500 g/mol to about 20000 g/mol, about 600 g/mol to about 10000 g/mol, about 700 g/mol to about 5000 g/mol, or about 800 g/mol to about 2500 g/mol, in increasing order of preference. Exemplary preferred ranges include about 850 g/mol to about 1400 g/mol, about 900 to about 1050 g/mol about 1200 to about 1350 g/mol, about 2100 g/mol to about 2450 g/mol or about 2200 g/mol to about 2400 g/mol. Thus, the surfactant may comprise an oil-soluble polymeric backbone, such as an olefin polymer, and may comprise one or more olefin polymers, functionalised with at least one polar functional group, being the reacted succinic acid or succinic anhydride functionality of the polyolefin succinic acid and/or polyolefin succinic anhydride with the amine functionality of the organic amine. The preferred surfactants, particularly those with an oleophilic group having a molecular weight within the ranges above, may have a hydrophilic-lipophilic balance (HLB) value, calculated using Griffin's Method, in which HLB = 20 × Mh/M where Mh is the molecular weight of the hydrophilic portion of the molecule and M is the molecular weight of the whole molecule. A preferred HLB value is from about 0.1 to about 15, such as from about 0.3 to about 13, more preferably from about 0.5 to about 10, such as from about 0.5 to about 5.5. As used herein, the term "polymer" (and commensurately the prefix "poly-") includes molecules formed from at least 2 monomer repeating chemical units, preferably having at least about 3, 4, 5, 6, 7, 8, 9, or 10 monomer repeating chemical units and up to about 1000, 500, 300, 200, 100, 50, 40, 30 or 20 monomer repeating chemical units, including without limitation homopolymers, copolymers (typically at least about 4, 5, 6, 7, 8, 9 or 10 repeat units and up to about 1000, 500, 300, 200, 100, 50, 40, 30 or 20 repeat units) and block copolymers (also typically at least about 4, 5, 6, 7, 8, 9 or 10 repeat units and up to about 1000, 500, 300, 200, 100, 50, 40, 30 or 20 repeat units). Also as used herein, the terms "olefin polymer," "poly(olefin)," "polyolefin" "poly(alkene)" and "polyalkene" "poly(alkylene)" and "polyalkylene" interchangably mean polymers of any olefinic monomer unit, that is to say any monomer unit comprising at least one C=C bond (any alkene), and preferably refers to hydrocarbonaceous alkenes, in this sense meaning alkenes or olefins consisting of carbon atoms and hydrogen atoms, or alternatively stated alkenes with no, or substantially no, heteroatoms. Suitable polymers of olefin monomer units may include polymers or co-polymers of ethene, propene, butene, pentene, hexene, heptene, octene, nonene, decene and so on, including without limitation any isomers thereof.

A preferred class of olefin polymers are polybutylenes, specifically polyisobutylenes (PIB, which as used herein may, additionally or alternatively, be taken to mean, where appropriate, polybutylenes), such as may be prepared by polymerization of a C4 refinery stream. In the case of polybutylenes, the stream may comprise a mixture of linear and branched butylene isomers, and in the case of polyisobutylenes the stream may comprise a higher proportion of the branched butylene isomer, isobutylene. Other preferred olefin polymers are polyisoprene (PIP), polypropylene and polyalphaolefin (PAO). The polyolefin, polybutylene, polyisobutylene, polyisoprene, polypropylene or polyalphaolefin chain preferably has a number average molecular weight (Mₙ) of from about 700 to about 5000 g/mol, preferably from about 800 to about 2500 g/mol such as from about 900 to about 1500 g/mol, 850 g/mol to about 1400 g/mol, about 900 to about 1050 g/mol, about 1200 to about 1350 g/mol, about 2100 g/mol to about 2450 g/mol or about 2200 g/mol to about 2400 g/mol.

Dispersants include, for example, derivatives of long chain hydrocarbon-substituted carboxylic acids, examples being derivatives of high molecular weight hydrocarbyl-substituted succinic acid. Typically, a hydrocarbonaceous polymeric material, such as polyisobutylene or polyisoprene (but any olefin polymer, copolymer, or block co-polymer which is capable of functionalisation by reaction with maleic acid or anhydride to make a succinate), is reacted with an acylating group (such as maleic acid or anhydride) to form a hydrocarbon-substituted succinic acid (succinate) or succinic anhydride. The hydrocarbonaceous polymeric material can be functionalised through any known means, such as a maleation reaction via the chlorination process or the thermal "ene" reaction.

The surfactant of the present invention comprises or consists of the reaction product of a polyolefin with maleic anhydride to produce a functionalised polyolefin succinic anhydride which is further reacted with an organic amine to produce a polyolefin succinic imide or amide. In some embodiments, the polyolefin comprises, or is, PIB, and the organic amine comprises, or is, PAM or TEPA.

Polyolefins are typically produced with a terminal olefin. Depending on the location of the terminal olefin, two routes to functionalisation using maleic anhydride are possible. For example, PIB rich in terminal olefins with a high proportion (over about 75%) of "vinylidene" terminal olefin are suitable for functionalisation with maleic anhydride using the thermal "ene" reaction and are thus termed thermal, or high-reactivity (HR), PIB (HR-PIB). By way of non-limiting example, commercially available examples of thermal or HR 1000 number average molecular weight (Mₙ) PIB include Glissopal 1000 produced by BASF, and TCP 595 produced by TPC group. PIB rich in other terminal olefins are suitable for functionalisation using chlorine gas via a Diels-Alder reaction with maleic anhydride and are termed "conventional" PIB. By way of non-limiting example, commercially available examples of 1000 Mₙ conventional PIB include PB950 from DL Chemical, and POLYBUT10 from YPF. Higher and lower Mₙ HR and conventional PIB are available from the same suppliers. Functionalisation with maleic anhydride by either route (thermal "ene" or chloro Diels-Alder) may result in a number of succinic anhydride functional groups per PIB molecule, the precise average amount being termed the "Functionality" or "Fn" which can be determined according to the following formula (I):

Fn=(SAP×Mₙ)[(1122×A.I.)-(SAP×MW)] (I)

wherein SAP is the saponification number (i.e., the number of milligrams of KOH consumed in the complete neutralization of the acid groups in one gram of the succinic-containing reaction product, as determined according to ASTM D94); Mₙ is the number average molecular weight of the starting olefin polymer (e.g. polybutylene); A.I. is the percent active ingredient of the succinic-containing reaction product; and MW is the molecular weight of the dicarboxylic acid-producing moiety (98 for maleic anhydride). A value for Fn less than or equal to 1.1 (or 1.10) is referred to as "low Fn PIBSA". Fn above 1.1 (or 1.10) is referred to as "high Fn PIBSA". The PIBSA so produced is further reacted with an amine in a process termed Amination. Primary amines are the most reactive, and so the resulting PIBSA-derived dispersants are further characterised by the molar ratio of succinic anhydride functional groups to primary amines, which is termed the "Coupling Ratio" or CR. PIBSA-derived dispersants with a coupling ratio less than or equal to 1 (or 1.0) are termed "Low CR dispersants". PIBSA-derived dispersants with a coupling ratio above 1 (or 1.0) are termed "High CR dispersants".

Preferred surfactants comprise the reaction product or mixture of a PIB (e.g. polyisobutylene) succinic acid or PIB (e.g. polyisobutylene) succinic anhydride, (each of which may be referred to as "PIBSA") with an organic amine, where the organic amine contains at least one primary amine group, or at least one secondary amine group, or at least one hydroxyl functional group, or combinations thereof. Examples of such organic amines include; 4-piperadinamine, 1-(Aminomethyl)piperidine, 4-(Aminomethyl)piperidine, 1-Aminoethylpiperidine, 4-Aminoethylpiperidine, 4-Amino-1-piperidineethanol, etc., 2-Morpholinoethylamine, 2-Morpholinopropylamine, etc., Piperazine (PZ) and its derivatives such as 1-(2-aminoethyl)piperazine (AEP), 1,4-piperazine diethanamine, 2-Piperazineethanamine, 1-Methylpiperazine, 2-Methylpiperazine, 2,5-Dimethylpiperazine, 1-Ethylpiperazine, 2-Ethylpiperazine, etc., and alkyl alcohol derivatives of piperazine including 1-(2-hydroxyethyl)piperazine (HEP), 2-Piperazineethanol, 1-Piperazinepropanol, etc., Ethylenediamine (EDA); Diethylenetriamine (DETA); Triethylenetetramine (TETA); Tetraethylenepentamine (TEPA); Pentaethylenehexamine (PEHA); Hexaethyleneheptamine (HEHA) and so on; and their polyolefin amine analogues (including without limitation polypropylene amine analogues, polybutylene amine analogues, polypentylene amine analogues, polyhexylene amine analogues, etc. and so on); Propylene diamine, 1,3-propanediamine, Dipropylenetriamine, Butylenediamine, Isobutylene diamine, 1,3-butane diamine, Dibutylenetriamine, 1,4-Butane diamine, 1,5-Pentanediamine, 1,6-Hexanediamine, etc. and so on; and Polyethyleneimine (PEI) (which may be either linear or branched and is preferably branched); Homopiperazine, 1,3-Diamino-2-propanol, (2-Hydroxyethyl)ethylenediamine, Tris(2-aminoethyl)amine, N-Methyl-1,3-propanediamine, 2,2-Dimethyl-1,3-propanediamine, N,N-Dimethyl-1,3-propanediamine, N-Cyclohexyl-1,3-propanediamine, 2,2'-(1,2-Ethanediyldiimino)bis[ethanol], 1,4-Diaminocyclohexane, Guanidine, Bis(dimethylaminoethyl) ether, Triethylethylenediamine, 1H-1,2,4-Triazole, 3-Amino-1H-1,2,4-Triazole, 2-Pyridinemethanamine, 2-Pyridineethanamine, 4-Aminopyridine, N,N-Diethyl-1,3-propanediamine, 1,3,5-Triazine, Melamine, o-Phenylenediamine, m- Phenylenediamine, p-Phenylenediamine, etc., and mixtures of such amines.

Preferably, the organic amine is; 1-(2-aminoethyl)piperazine (AEP), 2-Piperazineethanamine, Tris(2-aminoethyl)amine, 1-(2-hydroxyethyl)piperazine (HEP), 1,3-Diamino-2-propanol, Triethylenetetramine (TETA); Tetraethylenepentamine (TEPA); Pentaethylenehexamine (PEHA); Hexaethyleneheptamine (HEHA); PAM; H-PAM or mixtures of such organic amines, more preferable organic amines include those selected from; 1-(2-aminoethyl)piperazine (AEP), Tetraethylenepentamine (TEPA); PAM; H-PAM or mixtures of such organic amines, and even more preferable organic amines include tetraethylenepentamine (TEPA) or PAM.

It is of particular convenience for the organic amine to be the same material as the organic base, so by way of non-limiting example, the organic base (e.g. forming a component of the dispersion or composition) and the organic amine (e.g. of the surfactant) both may be 1-Aminoethylpiperazine, or both may be TEPA, or both may be selected from PAM or H-PAM, such as both being PAM or both being H-PAM. Where a mixture of nitrogen-containing compounds (e.g. organic amines or polyalkyl amines) is used in the surfactant, the same mixture may be used as the organic bases in the dispersion, and commensurately where a mixture of organic bases is used in the dispersion, the same mixture may be used as the nitrogen-containing compounds (e.g. organic amines or polyalkyl amines) in the surfactant. In further preferred embodiments, the surfactant is, or comprises, the reaction product of a PIB succinic acid and a polyamine such as 1-(2-aminoethyl)piperazine (AEP), Tetraethylenepentamine (TEPA); or PAM.

Accordingly, a particularly preferred surfactant comprises the reaction product or mixture of PIB succinic anhydride and/or PIB succinic acid according to the structures shown below: 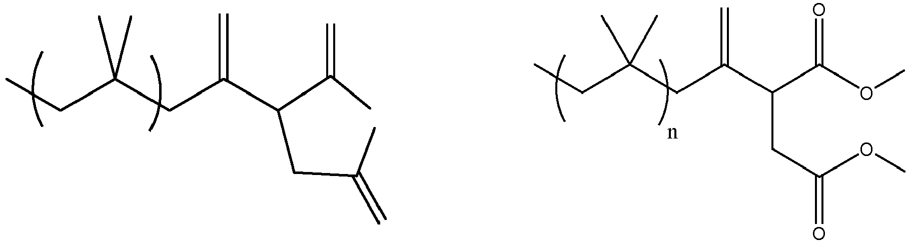 in either case wherein n is a positive integer from about 5 to about 200, with one or more organic amines selected from 1-Piperazineethanamine, Tetraethylenepentamine (TEPA), PAM or H-PAM, (preferably tetraethylenepentamine (TEPA) or PAM), wherein preferably n is from about 10 to about 100, more preferably from about 12 to about 90, even more preferably from about 14 to about 45 and even more preferably still from about 15 to about 25, such as from about 17 to about 19.

In some embodiments, the surfactant may be present in the dispersion in an amount of from about 0.1% to about 10%, from about 0.5% to about 9.5%, from about 1% to about 9%, from about 2% to about 8%, from about 3% to about 7%, from about 4% to about 6% or from about 5% to about 6%, such as about 5.5%, by weight of the dispersion on an active basis.

### Separation Composition

Compositions useful for separating acidic gases and, in the case of carbon dioxide, for undertaking carbon capture and release, as contemplated herein, are a dispersion of an organic base in a base oil with a surfactant. The organic base, base oil and surfactant represent the three major constituents of the compositions in accordance with the present invention.

Without wishing to be bound by theory, it is believed that the surfactant facilitates and stabilizes the formation of an internal phase, for example micelles, in a continuous phase. The organic base may form the internal phase (or discontinuous phase), and the base oil may form the external phase (or continuous phase), or the base oil may form the internal phase (or discontinuous phase) and the organic base may form the external phase (or continuous phase). Preferably, the organic base forms the internal phase (or discontinuous phase) and the base oil forms the external phase (or continuous phase). In either case, the surfactant may form a boundary layer (or interfacial phase) between the internal and external phases. Accordingly, the organic base may, with the surfactant in a boundary layer, form micelles in the base oil. Despite the surfactant therefore forming, in effect, a barrier between the gaseous mixture and the organic base, significant carbon capture is still observed, and a broader range of organic bases may therefore be used in combination with a medium in which they exhibit no or low solubility.

As the organic base provides the main functionality of separating the acidic gases and, in the case of carbon dioxide undertaking the carbon capture, it is desirable that significant quantities of the organic amine are present in the composition. Accordingly, in some preferred embodiments, the organic base is present in an amount of at least about 10%, preferably at least about 15%, more preferably at least about 20%, even more preferably at least about 30% and even more preferably still at least about 40% by weight of the composition. Accordingly, some preferred ranges of the amount of organic base present in the composition include from about 10% to about 80%, from about 15% to about 70%, from about 20% to about 60%, from about 25% to about 55% and from about 30% to about 50%, such as from about 30% to about 40% by weight of the composition on an active basis.

The basicity of the composition may also be described by means of the composition's Total Base Number (TBN), which as used herein may be measured in accordance with ASTM D4739. Accordingly, the TBN of the composition may be preferably in a range of from about 125 mg KOH/g to about 1100 mg KOH/g, such as from about 200 mg KOH/g to about 900 mg KOH/g, preferably from about 250 mg KOH/g to about 800 mg KOH/g, such as from about 325 mg KOH/g to about 725 mg KOH/g or from about 400 mg KOH/g to about 650 mg KOH/g, as measured in accordance with ASTM D4739-23 (on an oil free active ingredient basis).

In some preferred embodiments, the organic base forms, or is comprised within, an internal (or alternatively described, dispersed) phase in the base oil. The phase comprising the organic base may further comprise water but may preferably not further comprise water, i.e. the organic base may be dry, or substantially dry. Any water may be present in the composition before being exposed to the gaseous mixture, or may be derived from the gaseous mixture, such as where the gaseous mixture is an exhaust gas (also known as a flue gas) from a fossil fuel combustion process and the composition absorbs water from the gaseous mixture.

It is desirable that the organic base is labile or is not immobilised. The organic base may be described as labile if the organic base is cross-linked to a degree less than about 0.5%, preferably less than about 0.2%, more preferably less than about 0.1%, even more preferably less than about 0.01% and even more preferably still exhibits no, or substantially no, cross-linking; if the organic base has not been exposed to a cross-linking agent sufficient to result in substantial, preferably any, cross-linking; if the organic base is liquid (or in a solvated phase, such as an aqueous phase) at the operating conditions (pressure and temperature) of the carbon capture process; and/or if the organic base has a number average molecular weight not more than about 100,000 g/mol, such as no more than about 1000 g/mol, preferably from about 40 g/mol to about 500 g/mol, more preferably from about 50 g/mol to about 450 g/mol, even more preferably from about 80 g/mol to about 400 g/mol and even more preferably still from about 120 g/mol to about 350 g/mol. Accordingly, in accordance with some preferred embodiments of the invention, the ranges of cross-linking specified above provide in essence the maximum proportion of basic functionality (or maximum proportion of organic base molecules) forming covalent bonds to other organic base molecules, with the remaining basic functionality of the organic base typically undergoing only hydrogen bonding or Van der Waals interactions to other molecules.

Without wishing to be bound by theory, it is believed that providing a labile organic base improves the motility (or mobility) of the organic base in the dispersion, improving acidic gas uptake by improving the availability of the organic base. As cross-linking the organic base typically proceeds via the basic functionality, less such functionality is then available for carbon capture. By way of example, amine functionality (e.g. primary amine functionality or secondary amine functionality) may be reacted in forming cross-linking, reducing the amine functionality available for carbon capture.

The surfactant, meanwhile, will typically form a minor component of the composition. The amount of surfactant desired will depend on the amount of organic base that is to be dispersed in the base oil, as too little surfactant may reduce the stability of the dispersion while too much becomes free surfactant that offers little practical benefit, and may even destabilise the dispersion, while also potentially introducing other problems, such as raising the overall specific heat capacity of the composition. Some preferred ranges for the amount of surfactant present in the composition include from about 0.1% to about 10%, from about 0.5% to about 9.5%, from about 1% to about 9%, from about 2% to about 8%, from about 3% to about 7%, from about 4% to about 6% and from about 4.5% to about 5.5%, such as about 5%, by weight of the composition.

Having particular regard to the amount of organic amine and the surfactant quantities described above, the remainder of the composition will typically consist of the base oil and other impurities or additives, in particular other impurities or additives dissolved in the base oil and therefore also forming part of the continuous phase where the base oil makes up the continuous phase. In some embodiments, to form an effective continuous phase, the base oil (which may include impurities and additives dissolved therein) may be present in a significant or majority amount, such as about 50% by volume of the composition. Some preferred ranges for the amount of base oil (or continuous phase) present in the composition include from about 10% to about 90%, preferably from about 20% to about 80%, more preferably from about 30% to about 70%, even more preferably from about 40% to about 60% and even more preferably still from about 45% to about 55%, in each case by mass of the composition.

As referred to above, the separation composition may further comprise one or more additives, that may be in the internal or external phase, at the interface, or combinations thereof. Examples of such additives include antioxidants, corrosion inhibitors, antifoaming agents, pH modifiers, buffers, metal chelators, seal swell agents, flow improvers, carbon capture promoters (including water) and viscosity modifiers.

### Acidic Gas Separation Methods, Processes and Systems

The present invention contemplates methods, processes, and systems for the separation of acidic gases from a gaseous mixture comprising them. In particular, the present invention provides methods, processes, and systems for the separation (also referred to in the art as capture) of carbon dioxide from a gaseous mixture comprising carbon dioxide.

The methods and processes according to these aspects of the present invention are achieved generally by contacting the gaseous mixture comprising the acidic gas (particularly carbon dioxide) with a separation composition as described in detail above.

According to the methods of separating acidic gases (especially carbon dioxide) from a gaseous mixture containing such acidic gases (as the context requires, carbon dioxide), therefore, the method comprises contacting the gaseous mixture with a dispersion of at least one organic base and a base oil, the dispersion further comprising at least one surfactant; and the dispersion, organic base, base oil and surfactant being as described hereinabove. Alternatively, in general, the method may comprise contacting the gaseous mixture with a composition comprising a dispersion of at least one organic base and a base oil, the dispersion further comprising at least one surfactant, notably wherein the composition is the separation composition as described in detail above. Accordingly, the composition, dispersion and components thereof may further have any of the features described above alone or in combination. It is also to be understood that the method may equally be described as contacting the dispersion (or composition) with the gaseous mixture.

According to the processes of separating acidic gases (especially carbon dioxide) from a gaseous mixture containing such acidic gases (as the context requires, carbon dioxide), therefore, the processes comprise the steps of:
a. providing, charging or loading a vessel with a composition comprising a dispersion of at least one organic base and a base oil, the dispersion further comprising at least one surfactant, and the dispersion, organic base, base oil and surfactant being as described hereinabove; and
b. introducing the gaseous mixture to the vessel.

The steps of the processes may be carried out in any order, (i.e. the gaseous mixture may first be introduced into the vessel which is then provided, charged or loaded with the composition). This may be phrased as providing, charging or loading the gaseous mixture to the vessel and introducing the composition. Preferably, the steps are carried out in the order above. Further optional steps may accompany, especially follow, the steps above and include transferring the composition to a desorber and/or heating the composition to release (interchangeably desorb or remove) the acidic gas (especially carbon dioxide) from the composition. Other steps may include: removing the gaseous mixture from contact with or introduction to the dispersion; transferring the dispersion to a desorber; heating the dispersion, preferably to a temperature from 20 °C to 140 °C above the dispersion temperature when the gaseous mixture contacted the dispersion, more preferably to a temperature from 30 °C to 130 °C greater, even more preferably to a temperature from 40 °C to 120 °C greater, even more preferably still from 50 °C to 110 °C greater, and yet more preferably from about 60 °C to about 100 °C greater, to release the separated acidic gas; reducing the pressure around the dispersion to release the separated acidic gas; and/or contacting the dispersion with a purge gas to release the separated acidic gas, preferably wherein the purge gas comprises steam, nitrogen and/or air and more preferably in the case of the purge gas comprising nitrogen and/or air wherein the dispersion is contacted with the purge gas in combination with the abovementioned heating step.

Also preferably, the composition may be introduced via a spraying or other droplet or narrow stream forming mechanism to improve the surface area of composition available to be accessed by the gaseous mixture in turn to improve acidic gas (especially carbon dioxide) separation. The composition, dispersion and components thereof may further have any of the features described above alone or in combination. The gaseous mixture may contact the dispersion at any temperature in which the dispersion is a liquid and/or fluid and the rate of carbon capture exceeds that of carbon release from the dispersion or from the organic base. In some preferred embodiments, the gaseous mixture contacts the dispersion at a temperature of from about 20 °C to about 100 °C such as any of about 20 °C, about 25 °C, about 30 °C, about 40 °C, about 50 °C or about 60 °C to any of about 100 °C, about 95 °C about 90 °C, about 80 °C, about 70 °C or about 60°C. As the dispersion may reasonably be expected to have a significantly higher specific heat capacity than the gaseous mixture, and be more massive, the expression may be alternatively described as the dispersion being at a temperature in the range. Typically, any step of releasing the acidic gas, such as carbon dioxide, from the dispersion would be undertaken by heating the dispersion to a temperature greater than that at which the gaseous mixture contacted the dispersion, for example to a temperature greater than about 60 °C, greater than about 70 °C, greater than about 80 °C, greater than about 100 °C, greater than about 120 °C, greater than about 140 °C, or greater than about 160°C. Exemplary temperature ranges for the step of releasing the acidic gas, such as carbon dioxide, from the dispersion include from about 60 °C to about 160 °C, from about 80 °C to about 150 °C, from about 100 °C to about 145 °C and from about 120 °C to 140 °C. Accordingly, exemplary temperature differences between carbon capture and carbon release steps include ranges with upper and lower bounds selected from about 20, 25, 30, 35, 40, 45, 50, 60, 70, 80, 100, 120 or 140 °C, such as from about 20 °C to about 140 °C, from about 20 °C to about 120 °C, from about 20 °C to about 100 °C and so on, from about 25 °C to about 140 °C, from about 25 °C to about 120 °C, from about 25 °C to about 100 °C and so on, and also so on for each combination of upper and lower limit from the list provided above. Exemplary such ranges include from about 20 °C to about 140 °C, from about 30 °C to about 130 °C, from about 40 °C to about 120 °C, from about 50 °C to about 110 °C, from about 60 °C to about 100 °C. Alternative methods to release the acidic gas include a reduction of pressure in the system, i.e. around the dispersion, to drive off the acidic gas (pressure swing), or the use of a purge gas, such as steam in the case of steam stripping, or purging with another gas, such as nitrogen or air, preferably while heating the dispersion to an elevated temperature to release the acidic gas.

The gaseous mixture may contact the dispersion while having any concentration of acidic gas (especially carbon dioxide), for example the acidic gas (especially carbon dioxide) concentration in the gaseous mixture (by weight or volume percent) may be at least, or greater than, about 2%, greater than about 5%, greater than about 10%, greater than about 15%, greater than about 20%, greater than about 30%, greater than about 40%, greater than about 60%, greater than about 80%, or greater than about 99.9%, such as any ranges from about 2%, about 3%, about 5%, about 10%, about 15% or about 20% to about 25%, about 30%, about 40%, about 60%, about 80%, about 90%, about 95%, about 99%, about 99.9% or about 100% to about 100%, including without limitation ranges such as from about 5% to about 99.9%, from about 10% to about 80%, from about 15% to about 40% or from about 20% to about 30%.

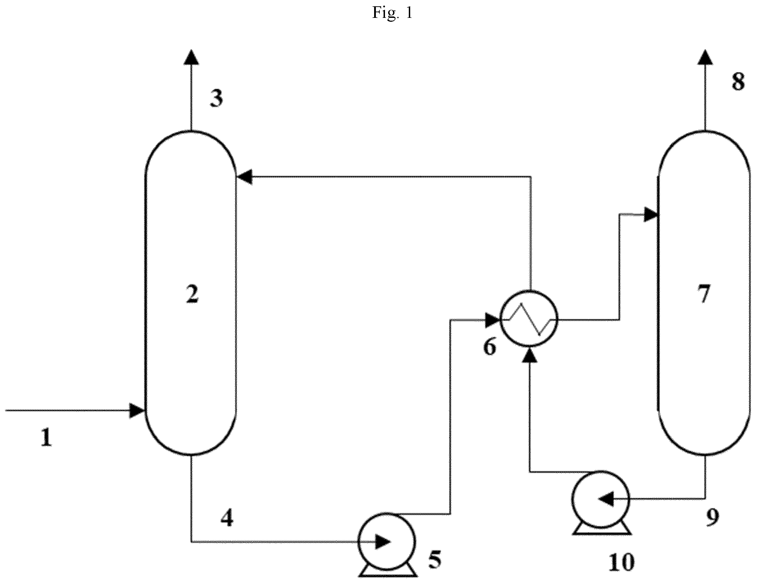

A schematic representation of an apparatus/system suitable for the processes and methods described above is shown in Fig. 1. An example process involves cooling a gaseous mixture (1) (containing acidic gases such as carbon dioxide) in a cooling tower (not shown), before contacting the gaseous mixture under optimum absorption conditions in an absorption tower (2), via such methods as described above, the absorption tower containing a composition comprising a dispersion of at least one organic base and a base oil, the dispersion further comprising at least one surfactant. This process reduces the concentration of acidic gas in the gaseous mixture (3), producing a rich solvent (4), in this sense meaning acidic gas rich, carbon rich or carbon dioxide rich. This could be a continuous process, whereby the rich solvent is transferred or pumped (5) to a desorber (7), optionally via a heat exchanger (6), where the rich solvent is heated to a nominated temperature using an appropriate method to release the captured acidic gas (8) and regenerate the lean solvent (9), in this sense meaning acidic gas lean, carbon lean, or carbon dioxide lean. The lean solvent is then transferred or pumped (10) back to the absorber (2), optionally via a heat exchanger (6), coming back into contact with the gaseous mixture and enabling the process to operate in a continuous fashion.

Also contemplated by the present invention are systems for separating acidic gases from a gaseous mixture comprising such acidic gases such as described above as used in the processes and methods of the present invention, the systems comprising a vessel (a reactor) with means for fluid introduction and removal, wherein "fluid" includes a gas or a liquid, and the vessel may comprise means to introduce to the vessel and/or remove from the vessel one or more fluids such as gases or liquids, including the gaseous mixture comprising an acidic gas (especially a gaseous mixture comprising carbon dioxide) and a separation composition as hereinbefore described. In order to effect the acidic gas separation, the vessel contains a composition comprising a dispersion of at least one organic base and a base oil, the dispersion further comprising at least one surfactant, at least at the point of use for acidic gas separation, and the dispersion, organic base, base oil and surfactant being as described hereinabove. The composition, dispersion and components thereof may further have any of the features of the compositions, dispersions and components thereof described above, alone or in combination. Accordingly, the compositions and dispersions described herein may be used to separate acidic gases (for example, carbon dioxide) from a gaseous mixture containing such acidic gases, and to capture carbon dioxide from a gaseous mixture containing carbon dioxide.

As demonstrated in the examples included below, the methods, processes, compositions and uses of the present invention may achieve a gram for gram (alternatively referred to as gram per gram), acidic gas or carbon dioxide loading measured in grams of carbon dioxide (or acidic gas) per gram of solvent, i.e. dispersion or composition, (g_{CO2}/gₛₒₗᵥₑₙₜ), of from about 0.001 g_{CO2}/gₛₒₗᵥₑₙₜ to about 1 g_{CO2}/gₛₒₗᵥₑₙₜ, from about 0.01 g_{CO2}/gₛₒₗᵥₑₙₜ to about 0.2 g_{CO2}/gₛₒₗᵥₑₙₜ or from about 0.04 g_{CO2}/gₛₒₗᵥₑₙₜ to about 0.15 g_{CO2}/gₛₒₗᵥₑₙₜ, such as from about 0.05 g_{CO2}/gₛₒₗᵥₑₙₜ to about 0.12 g_{CO2}/gₛₒₗᵥₑₙₜ (or from about 0.006 g_{CO2}/gₛₒₗᵥₑₙₜ to about 0.12 g_{CO2}/gₛₒₗᵥₑₙₜ), from about 0.06 g_{CO2}/gₛₒₗᵥₑₙₜ to about 0.09 g_{CO2}/gₛₒₗᵥₑₙₜ or from about 0.08 g_{CO2}/gₛₒₗᵥₑₙₜ to about 0.1 g_{CO2}/gₛₒₗᵥₑₙₜ, in each case where g_{CO2}/gₛₒₗᵥₑₙₜ may be replaced with g_{acidic gas}/gₛₒₗᵥₑₙₜ.

Also as demonstrated in the examples included below, the methods, processes, compositions and uses of the present invention may achieve a mol for mol (alternatively referred to as mol per mol), acidic gas or carbon dioxide loading measured in moles of carbon dioxide (or acidic gas) per moles of organic base molecules in the solvent, i.e. dispersion or composition, (*n*_{CO2}/*n*ₐₘᵢₙₑ), of up to about 1.4 *n*_{CO2}/*n*ₐₘᵢₙₑ, such as in the ranges of from about 0.01 *n*_{CO2}/*n*ₐₘᵢₙₑ to about 1.4 *n*_{CO2}/*n*ₐₘᵢₙₑ, from about 0.1 *n*_{CO2}/*n*ₐₘᵢₙₑ to about 1.3 *n*_{CO2}/*n*ₐₘᵢₙₑ, from about 0.2 *n*_{CO2}/*n*ₐₘᵢₙₑ to about 1.2 *n*_{CO2}/*n*ₐₘᵢₙₑ, from about 0.4 *n*_{CO2}/*n*ₐₘᵢₙₑ to about 1.2 *n*_{CO2}/*n*ₐₘᵢₙₑ, from about 0.6 *n*_{CO2}/*n*ₐₘᵢₙₑ to about 1.2 *n*_{CO2}/*n*ₐₘᵢₙₑ, or from about 0.8 *n*_{CO2}/*n*ₐₘᵢₙₑ, to about 1.1 *n*_{CO2}/*n*ₐₘᵢₙₑ, in each case where *n*_{CO2}/*n*ₐₘᵢₙₑ may be replaced with *n*_{acidic gas}/*n*ₐₘᵢₙₑ.

The dimensions and values disclosed herein are not to be understood as being strictly limited to the exact numerical values recited. Rather, unless otherwise specified, each such dimension is intended to mean both the recited value and a functionally equivalent range surrounding that value. For example, a dimension disclosed as "40 mm" is intended to mean "about 40 mm".

Every document cited herein, including any cross referenced or related patent or application, is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests, or discloses any such invention.

Further, to the extent that any meaning or definition of a term in this document conflicts with any meaning or definition of the same term in a document incorporated by reference, the meaning or definition assigned to that term in this document shall prevail.

While certain particular embodiments of the present invention have been illustrated and described herein, it would be apparent to those skilled in the art that various other changes and modifications can be made without departing from the spirit and scope of the invention, and it is intended, accordingly, to cover in the accompanying claims all such changes and modifications that are within the scope and spirit of this invention.

Unless otherwise stated or evidently required to be performed under different conditions, measurements described herein are made under standard conditions.

### Examples

The invention is further detailed below with reference to the following non-limiting examples:

### Example 1 - Description of Surfactants Used in Acidic Gas Separation Compositions

The surfactants of Example 1 comprise or consist of the reaction product of a polyolefin with maleic anhydride to produce a functionalised polyolefin succinic acid/anhydride which is further reacted with an organic amine having at least two aminic functional groups to produce a polyolefin succinic imide or amide. In the following examples, the polyolefin is PIB, and the organic amine is PAM or Tetraethylenepentamine (TEPA).

The examples in Table 2 represent a range of possible surfactants that were utilised to prepare the acidic gas separation compositions in examples according to the invention. Example 1.1 contains 2300 g/mol HR-PIB functionalised with maleic anhydride by the previously described thermal "ene" reaction, to form PIBSA, which was further reacted with PAM, to produce the final PIBSA-PAM dispersant, or further reacted with TEPA to produce the final PIBSA-TEPA dispersant. Example 1.2 is produced in a similar way with increased functionality. Examples 1.3 and 1.4 in Table 2 are functionalised with maleic anhydride produced from the previously described chloro reaction and utilise PIB with number average molecular weight of 2225 and 950 g/mol, respectively, and also with low and high coupling ratios, respectively. Examples 1.5, 1.6 and 1.7 are produced in a similar way to Example 1.1 using the thermal route using thermal PIB with number average molecular weight of 1000, 700 and 450 g/mol and a range of functionalities and coupling ratios.

**TABLE 2: Surfactants for Preparing Acidic Gas Separation Compositions**

| **Example** | **PIB Molecular Weight / g/mol** | **Functionalisation Reaction** | **Organic Amine** | **Fn** | **CR** |
|---|---|---|---|---|---|
| Example 1.1 | 2300 | Thermal | PAM | Low | Low |
| Example 1.2 | 2300 | Thermal | PAM | High | Low |
| Example 1.3 | 2225 | Chloro | PAM | High | Low |
| Example 1.4 | 950 | Chloro | PAM | High | High |
| Example 1.5 | 1000 | Thermal | TEPA | Low | Low |
| Example 1.6 | 700 | Thermal | PAM | Low | High |
| Example 1.7 | 450 | Thermal | PAM | High | High |

### Example 2 - Preparation of Acidic Gas Separation Compositions

70g (±1%) of Example 1.1 was added to 420g (±1%) of Group II base oil (Chevron 100R) in a 1.5 litre glass beaker, weighed out using a Sartorius Combics 1 balance. The mixture was stirred using an overhead stirrer (IKA EUROSTAR 40) at 200RPM, heated to 60 °C using a hotplate (CAT M26 G2), and held at that temperature and stirring for 30 mins. The mixture was then cooled and transferred to a mixer (Silverson L5M-A) fitted with a Silverson emulsor screen workhead. 210g of organic base (TEPA, supplied by Huntsman Corporation) was then added to the mixture and the resulting mixture was heated to 90 °C using a hotplate (CAT M26 G2) while stirring at a speed of 4000 RPM, or if lower, the maximum stirring speed achievable before splashing was observed outside the confines of the 1.5 litre glass beaker and held at that temperature and stirring for 6 hours, before being decanted immediately and allowed to cool to room temperature. This experimental method was used with a range of quantities and identities of chemical components added as detailed in Table 3. Amines used in these examples include TEPA (supplied by Huntsman Corporation) and alternatively commercially available PAM (Ethyleneamine E-100, supplied by Huntsman Corporation), 1-(2-aminoethyl)piperazine (AEP, CAS: 140-31-8, 99% purity, supplied by Sigma Aldrich), or 1-(2-hydroxyethyl)piperazine (HEP, CAS: 103-76-4, 99% purity, supplied by Sigma Aldrich). The viscosities of the resultant acidic gas separation compositions are provided in Table 4.

**TABLE 3: Acidic Gas Separation Compositions**

| **Example** | **Amine / wt.%** | **Surfactant / wt.%** | **Base Oil (main component listed) / wt.%** |
|---|---|---|---|
| **Example 2.1** | TEPA / 30 | Example 1.1 / 0.55 | Chevron 100R / 69.45 |
| **Example 2.2** | TEPA / 30 | Example 1.1 / 1.1 | Chevron 100R / 68.9 |
| **Example 2.3** | TEPA / 30 | Example 1.1 / 1.65 | Chevron 100R / 68.35 |
| **Example 2.4** | TEPA / 30 | Example 1.1 / 2.2 | Chevron 100R / 66.8 |
| **Example 2.5** | TEPA / 30 | Example 1.1 / 5.5 | Chevron 100R / 64.5 |
| **Example 2.6** | TEPA / 30 | Example 1.1 / 11 | Chevron 100R / 59 |
| **Example 2.7** | TEPA / 30 | Example 1.1 / 16.5 | Chevron 100R / 53.5 |
| **Example 2.8** | None / 0 | Example 1.1 / 5.5 | Chevron 100R / 94.5 |
| **Example 2.9** | TEPA / 5 | Example 1.1 / 5.5 | Chevron 100R / 89.5 |
| **Example 2.10** | TEPA 10 | Example 1.1 / 5.5 | Chevron 100R / 84.5 |
| **Example 2.11** | TEPA / 20 | Example 1.1 / 5.5 | Chevron 100R / 74.5 |
| **Example 2.12** | TEPA / 40 | Example 1.1 / 5.5 | Chevron 100R / 54.5 |
| **Example 2.13** | TEPA / 50 | Example 1.1 / 5.5 | Chevron 100R / 44.5 |
| **Example 2.14** | TEPA / 60 | Example 1.1 / 5.5 | Chevron 100R / 34.5 |
| **Example 2.15** | TEPA / 70 | Example 1.1 / 5.5 | Chevron 100R / 24.5 |
| **Example 2.16** | TEPA / 30 | Example 1.2 / 4.6 | Chevron 100R / 65.4 |
| **Example 2.17** | TEPA / 30 | Example 1.3 / 5.5 | Chevron 100R / 64.5 |
| **Example 2.18** | TEPA / 30 | Example 1.4 / 3.9 | Chevron 100R/66.1 |
| **Example 2.19** | TEPA / 30 | Example 1.5 / 2.6 | Chevron 100R / 67.4 |
| **Example 2.20** | TEPA / 30 | Example 1.6 / 3.75 | Chevron 100R / 66.25 |
| **Example 2.21** | TEPA / 30 | Example 1.7 / 1.9 | Chevron 100R/68.1 |
| **Example 2.22** | TEPA / 30 | Example 1.1 / 5.5 | CORE 100/64.5 |
| **Example 2.23** | TEPA / 30 | Example 1.1 / 5.5 | YUBASE 2 / 64.5 |
| **Example 2.24** | TEPA / 30 | Example 1.1 / 5.5 | YUBASE 4 / 64.5 |
| **Example 2.25** | TEPA / 30 | Example 1.1 / 5.5 | SpectraSyn 2 / 64.5 |
| **Example 2.26** | TEPA / 30 | Example 1.1 / 5.5 | SpectraSyn 4 / 64.5 |
| **Example 2.27** | PAM / 30 | Example 1.1 / 5.5 | Chevron 100R / 64.5 |
| **Example 2.28*** | TEPA / 30 | Example 1.1 / 5.5 | Chevron 100R / 54.5 |
| | H₂O/ 10 | | |
| **Example 2.29*** | AEP / 30 | Example 1.1 / 5.5 | Chevron 100R / 64.5 |
| **Example 2.30** | AEP / 30 | Example 1.1 / 5.5 | Chevron 100R / 54.5 |
| | H₂O / 10 | | |
| **Example 2.31** | HEP / 30 | Example 1.1 / 5.5 | Chevron 100R / 64.5 |
| **Example 2.32** | TEPA / 40 | Example 1.1 / 2.8 | SpectraSyn 2 / 57.2 |

| | | | |
|---|---|---|---|
| * Heated to 70°C in lieu of 90°C (after addition of organic base) owing to the flash point of the amines used, and/or presence of water (to reduce volatile losses during blending). | | | |

**TABLE 4: Kinematic Viscosity of Acidic Gas Separation Compositions, measured at 40 °C using ASTM D445-24**

| **Example** | **Kinematic Viscosity / cSt** |
|---|---|
| **Example 2.1** | 47.3 |
| **Example 2.2** | 51.1 |
| **Example 2.3** | 196.8 |
| **Example 2.4** | 60 |
| **Example 2.5** | 104.1 |
| **Example 2.6** | 291 |
| **Example 2.7** | 836.3 |
| **Example 2.8** | 38.5 |
| **Example 2.9** | 42 |
| **Example 2.10** | 48.5 |
| **Example 2.11** | 68.4 |
| **Example 2.12** | 496.8 |
| **Example 2.13** | 609.8 |
| **Example 2.14** | 124.9 |
| **Example 2.15** | 68.3 |
| **Example 2.16** | 86.8 |
| **Example 2.17** | 98.1 |
| **Example 2.18** | 65.3 |
| **Example 2.19** | 54.7 |
| **Example 2.20** | 54.4 |
| **Example 2.21** | 22.4 |
| **Example 2.22** | 104.3 |
| **Example 2.23** | 45.1 |
| **Example 2.24** | 89.1 |
| **Example 2.25** | 24.1 |
| **Example 2.26** | 81.4 |
| **Example 2.27** | 107.2 |
| **Example 2.28** | 71.8 |
| **Example 2.29** | 63.7 |
| **Example 2.30** | 99.9 |
| **Example 2.31** | 94.6 |
| **Example 2.32** | 20.5 |

### Example 3 - Carbon Dioxide Absorption Experiment

Acidic gas separation compositions according to Example 2 were charged into a 200mL jacketed glass reactor, fitted with an oil bath circulator to control the temperature (Huber Petite Fleur), a thermocouple, and an overhead stirrer (Heidolph Hei-TORQUE Ultimate 400). Gas flow enters the bottom of the reactor via Swagelok tubing through a sintered glass filter, contacting the acidic gas separation composition, and exits the reactor through a condenser cooled to -15 °C (0 °C for aqueous systems) using a chiller (Huber Minichiller 300). Calibrated mass flow controllers (Bronkhorst EL-Flow Select) and other accessories (such as the oil bath, chiller, and overhead stirrer) were controlled via a serial box (Brainboxes US-279 8xRS232) and PC (Syrris Atlas PC Software 1) and were used to control the flow of gas entering the reactor, and to measure the gas exiting the reactor, so that CO₂ uptake amounts could be calculated.

In an absorption experiment, the following conditions were used unless stated otherwise. A measured amount of acidic gas separation composition (≈70g) was charged into the reactor under a flow of 0.3 g·min⁻¹ N₂, and the mass was measured using a Sartorius MCA524S-2S00-I balance (± 0.05mg). The reactor was then assembled with the thermocouple, condenser, and overhead stirrer. The temperature of the reactor was set to 40 °C and the overhead stirrer to 500RPM. After temperature equilibrium was reached (ca. 15 mins), the CO₂ uptake measurement was started by introducing CO₂ into the gas feed at 14 wt.% concentration with a N₂ diluent gas, with a total flow rate of 0.3 g·min⁻¹. To calculate the g_{CO2}/gₛₒₗᵥₑₙₜ loading value, the number of grams of CO₂ absorbed by the acidic gas separation composition was divided by the number of grams of solvent charged to the reactor. This also allows for the number of moles of CO₂ per number of moles of amine (*n*_{CO2}/*n*ₐₘᵢₙₑ) to be calculated.

The absorption experiment was then stopped after saturation of the solvent by CO₂ was observed, typically after 180mins, dependant on the amount of organic base present in the acidic gas separation composition. The overall error between replicate measurements carried out on the same sample using this method was 10%.

A first set of absorption experiments using the procedure above was undertaken, varying the concentration of PIB SA-PAM surfactant (of Example 1.1) while maintaining the concentration and identity of organic base (TEPA). The results appear in Table 5 showing significant CO₂ loading achieved by the separation composition across a range of surfactant levels, and suggesting a preference for increasing surfactant owing to the slightly increased *n*_{CO2}/*n*ₐₘᵢₙₑ and g_{CO2}/gₛₒₗᵥₑₙₜ loading achievable at higher surfactant levels. Despite this, a preferred range of surfactant concentration is about 5% to about 6% by weight, owing to a compromise between CO₂ loading and a notable kinematic viscosity increase (measured at 40 °C) beyond this point (Table 4), which may have drawbacks for absorption kinetics or pumping and plant design. These results compare favourably with a current benchmark technology, an aqueous solution of 30 wt.% monoethanolamine, which may typically achieve CO₂ loadings of 0.129 g_{CO2}/gₛₒₗᵥₑₙₜ and 0.597 *n*_{CO2}/*n*ₐₘᵢₙₑ, notably in the context of the energetic savings offered by the considerably lower specific heat capacity of the compositions of the present invention.

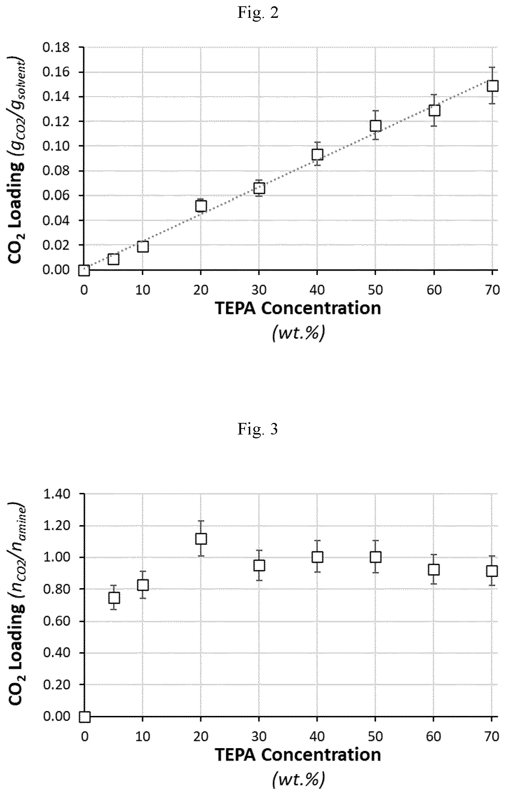

A second set of absorption experiments using the procedure above was further undertaken, varying the concentration of TEPA organic base while maintaining the concentration and identity of PIB SA-PAM surfactant (of Example 1.1) in the acidic gas separation composition of Example 2. The results of this second set of experiments appear in Table 6, Figure 2 and Figure 3 showing significant CO₂ loading achieved by the separation composition across a range of organic base levels in a broadly linear relationship. As the organic base concentration was increased, in addition to the g_{CO2}/gₛₒₗᵥₑₙₜ CO₂ loading increasing, it was also observed that the n_{CO2}/nₐₘᵢₙₑ CO₂ loading also increased to a maximum at 20 wt% TEPA, indicating that the overall availability of the organic base present, not merely the quantity, was increased with increasing concentration up to 20 wt% and broadly maintained over 20 wt%. The organic base concentration of 20% in these examples compares favourably with an aqueous solution of 20 wt.% TEPA, which may typically capture 0.052 g_{CO2}/gₛₒₗᵥₑₙₜ and 1.128 *n*_{CO2}/*n*ₐₘᵢₙₑ.

A third set of experiments using the procedure above was further undertaken, varying the identity of the organic base while maintaining the concentration of the organic base as well as maintaining the concentration and identity of PIBSA-PAM surfactant (of Example 1.1) in the composition of Example 2. The results of this third set of experiments appear in Table 7 showing that dispersions of different organic bases can be utilised in the present invention to capture acidic gases such as CO₂. Furthermore, the results of Table 6 also demonstrate that complex mixtures of two or more components (amines or other compounds in the internal phase, such as water) are capable of forming a dispersion to capture CO₂.

A fourth set of experiments using the procedure above was further undertaken, varying the identity of the surfactant (of Example 1.1, 1.2, 1.3, 1.4, 1.5, 1.6, 1.7) while maintaining the concentration and identity of the organic base in the composition of Example 2. The results of this fourth set of experiments appear in Table 8 showing that surfactants of different compositions, described in Example 1, can be used to produce dispersions capable of achieving similar CO₂ loadings.

A fifth set of experiments using the procedure above was further undertaken, varying the identity of the base oil while maintaining the concentration and identity of the TEPA organic base and while maintaining the concentration and identity of PIBSA-PAM surfactant (of Example 1.1) in the composition of Example 2. The results of this fifth set of experiments appear in Table 9 indicating that different base oils can be used to produce dispersions capable of achieving similar CO₂ loadings.

A sixth set of experiments using the procedure above was further undertaken, varying the absorption conditions. Table 10 demonstrates the acidic gas separation composition (of Example 2.32) is capable of absorbing CO₂ at a variety of CO₂ concentrations, ranging from 5-20 wt.% CO₂, achieving similar loadings at 10 and 20 wt.% CO₂, with a lower loading observed at 5 wt.% CO₂. As would be expected, it was also found that the time to reach equilibrium increased as the concentration of CO₂ was reduced. Table 11 displays the effect of increasing the temperature of the acidic gas separation composition (of Example 2.32) during the absorption procedure, indicating that similar loadings are achieved at 40 and 80 °C, before then decreasing at 120 °C. This unexpectedly indicates that higher absorption temperatures may be possible for this Example, and that the flue gas may therefore only need to be cooled to a lesser degree, indicating further potential operating cost savings, environmental benefits and energy efficiencies.

**TABLE 5: Carbon dioxide separation results with varying concentration of PIBSA-PAM surfactant (Example 1.1) and fixed concentration of TEPA organic base (30 wt.%)**

| **Example** | **PIBSA-PAM** *(wt.%)* | **CO₂ Loading** | |
|---|---|---|---|
| | | *g_{CO2}*/*gₛₒₗᵥₑₙₜ* | *n_{CO2}*/*nₐₘᵢₙₑ* |
| **Example 2.1** | 0.55 | 0.062 | 0.885 |
| **Example 2.2** | 1.1 | 0.062 | 0.886 |
| **Example 2.3** | 1.65 | 0.066 | 0.944 |
| **Example 2.4** | 2.2 | 0.065 | 0.932 |
| **Example 2.5** | 5.5 | 0.066 | 0.951 |
| **Example 2.6** | 11 | 0.071 | 1.017 |
| **Example 2.7** | 16.5 | 0.076 | 1.094 |

**TABLE 6: Carbon dioxide separation results with varying concentrations (wt.%) of TEPA in Example 2 and fixed concentration (5.5 wt.%) PIBSA-PAM (Example 1.1)**

| **Example** | **TEPA** *(wt.%)* | **CO₂ Loading** | |
|---|---|---|---|
| | | *g_{CO2}*/*gₛₒₗᵥₑₙₜ* | *n_{CO2}*/*nₐₘᵢₙₑ* |
| **Example 2.8** | 0 | 0 | 0 |
| **Example 2.9** | 5 | 0.009 | 0.751 |
| **Example 2.10** | 10 | 0.019 | 0.829 |
| **Example 2.11** | 20 | 0.052 | 1.119 |
| **Example 2.5** | 30 | 0.066 | 0.951 |
| **Example 2.12** | 40 | 0.094 | 1.006 |
| **Example 2.13** | 50 | 0.117 | 1.005 |
| **Example 2.14** | 60 | 0.129 | 0.924 |
| **Example 2.15** | 70 | 0.149 | 0.917 |

**TABLE 7: Carbon dioxide separation results with varying organic bases and fixed concentration (5.5 wt.%) of PIBSA-PAM surfactant (Example 1.1)**

| **Example** | **Organic Base** | **wt.%** | **CO₂ Loading** | |
|---|---|---|---|---|
| | | | *g_{CO2}*/*gₛₒₗᵥₑₙₜ* | *n_{CO2}*/*nₐₘᵢₙₑ* |
| **Example 2.5** | TEPA | 30 | 0.066 | 0.951 |
| **Example 2.28** | TEPA | 30 | 0.099 | 1.420 |
| | H₂O | 10 | | |
| **Example 2.27** | PAM | 30 | 0.056 | 1.160 |
| **Example 2.29** | AEP | 30 | 0.050 | 0.490 |
| **Example 2.30** | AEP | 30 | 0.071 | 0.691 |
| | H₂O | 10 | | |
| **Example 2.31** | HEP | 30 | 0.026 | 0.253 |

**TABLE 8. Carbon dioxide separation results with varying surfactants at matched mol% concentration and fixed concentration of TEPA (30 wt.%)**

| **Example** | **Surfactant** | **wt.%** | **TEPA** *(wt.%)* | **CO₂ Loading** | |
|---|---|---|---|---|---|
| | | | | *g_{CO2}*/*gₛₒₗᵥₑₙₜ* | *n_{CO2}*/*nₐₘᵢₙₑ* |
| **Example 2.5** | Example 1.1 | 5.5 | 30 | 0.066 | 0.951 |
| **Example 2.16** | Example 1.2 | 4.6 | 30 | 0.075 | 1.076 |
| **Example 2.17** | Example 1.3 | 5.5 | 30 | 0.079 | 1.138 |
| **Example 2.18** | Example 1.4 | 3.9 | 30 | 0.065 | 0.931 |
| **Example 2.19** | Example 1.5 | 2.6 | 30 | 0.061 | 0.880 |
| **Example 2.20** | Example 1.6 | 3.75 | 30 | 0.060 | 0.859 |
| **Example 2.21** | Example 1.7 | 1.9 | 30 | 0.038 | 0.544 |

**TABLE 9. Carbon dioxide separation results with varying base oil and fixed concentration of TEPA (30 wt.%) and PIBSA-PAM surfactant (Example 1.1) (5.5 wt.%)**

| **Example** | **Base Oil** | **CO₂ Loading** | |
|---|---|---|---|
| | | *g_{CO2}*/*gₛₒₗᵥₑₙₜ* | *n_{CO2}*/*nₐₘᵢₙₑ* |
| **Example 2.5** | Chevron 100R | 0.066 | 0.951 |
| **Example 2.22** | CORE 100 | 0.066 | 0.941 |
| **Example 2.23** | YUBASE 2 | 0.074 | 1.075 |
| **Example 2.24** | YUBASE 4 | 0.058 | 0.838 |
| **Example 2.25** | Spectrasyn 2 | 0.061 | 0.877 |
| **Example 2.26** | Spectrasyn 4 | 0.064 | 0.920 |

**TABLE 10. Carbon dioxide separation results at 40 °C with varying CO₂ concentrations**

| **Example** | **CO₂ Concentration** | **CO₂ Loading** | |
|---|---|---|---|
| | | *g_{CO2}*/*gₛₒₗᵥₑₙₜ* | *n_{CO2}*/*nₐₘᵢₙₑ* |
| **Example 2.32** | 5 wt.% | 0.044 | 0.477 |
| | 10 wt.% | 0.075 | 0.807 |
| | 20 wt.% | 0.076 | 0.822 |

**TABLE 11. Carbon dioxide separation results with varying absorption temperature (°C)**

| **Example** | **Absorption Temperature (°C)** | **CO₂** Loading | |
|---|---|---|---|
| | | *g_{CO2}*/*gₛₒₗᵥₑₙₜ* | *n_{CO2}*/*nₐₘᵢₙₑ* |
| **Example 2.32** | 40 | 0.075 | 0.807 |
| | 80 | 0.074 | 0.798 |
| | 120 | 0.047 | 0.502 |

## Claims

1. A method of separating acidic gases from a gaseous mixture containing such acidic gases, the method comprising contacting the gaseous mixture with a dispersion of at least one organic base and an oil, the dispersion further comprising at least one surfactant;
wherein the surfactant comprises or consists of the reaction product of a polyolefin succinic acid and/or polyolefin succinic anhydride with at least one organic amine comprising at least two aminic functional groups; wherein the organic base comprises at least two aminic functional groups; and wherein the organic amine and the organic base may be the same or different.

2. A process for separating acidic gases from a gaseous mixture comprising such acidic gases, comprising the steps of:
a. providing, charging or loading a vessel with a composition comprising a dispersion of at least one organic base and an oil, the dispersion further comprising at least one surfactant; and
b. introducing the gaseous mixture to the vessel,
wherein the surfactant comprises or consists of the reaction product of a polyolefin succinic acid and/or polyolefin succinic anhydride with at least one organic amine comprising at least two aminic functional groups; wherein the organic base comprises at least two aminic functional groups; and wherein the organic amine and the organic base may be the same or different.

3. A method according to Claim 1 or a process according to Claim 2, wherein the at least one organic base contains amine functionality selected from primary amine functionality, secondary amine functionality, tertiary amine functionality, both primary and secondary amine functionality, both primary and tertiary amine functionality, both secondary and tertiary amine functionality or the combination of primary, secondary and tertiary amine functionality.

4. A method or process according to any preceding claim wherein at least one organic base is selected from Piperazine, 1-(2-aminoethyl)piperazine (AEP), 2-Piperazineethanamine, Tris(2-aminoethyl)amine, 1-(2-hydroxyethyl)piperazine (HEP), 1,3-Diamino-2-propanol, Triethylenetetramine (TETA), Tetraethylenepentamine (TEPA) , Pentaethylenehexamine (PEHA), Hexaethyleneheptamine (HEHA), polyamine (PAM), heavy polyamine (H-PAM), and mixtures of any of the foregoing; preferably wherein at least one organic base is selected from Piperazine, 1-(2-aminoethyl)piperazine (AEP), Tetraethylenepentamine (TEPA), polyamine (PAM), heavy polyamine (H-PAM), and mixtures thereof.

5. A method or process according to any preceding claim wherein the polyolefin has a molecular mass of from 200 g/mol to 50000 g/mol, preferably from 300 g/mol to 40000 g/mol, more preferably from 400 g/mol to 30000 g/mol, even more preferably from 500 g/mol to 20000 g/mol, even more preferably still from 600 g/mol to 10000 g/mol, yet further preferably from 700 g/mol to 5000 g/mol, or yet further preferably still from 800 g/mol to 2500 g/mol.

6. A method or process according to any preceding claim wherein the organic amine comprises primary amine functionality.

7. A method or process according to any preceding claim wherein at least one organic amine is selected from 1-Aminoethylpiperazine, 2-Piperazineethanamine, Triethylenetetramine, Tetraethylenepentamine (TEPA), Pentaethylenehexamine (PEHA), Hexaethyleneheptamine (HEHA), polyamine (PAM), heavy polyamine (H-PAM), polyethyleneimines (whether linear, cyclic and/or branched), and mixtures of any of the foregoing; preferably wherein at least one organic amine is selected from 1-Piperazineethanamine, Tetraethylenepentamine (TEPA), polyamine (PAM), heavy polyamine (H-PAM), and mixtures thereof; more preferably wherein at least one organic amine is selcted from tetraethylenepentamine (TEPA), polyamine (PAM), and mixtures thereof.

8. A method or process according to any preceding claim wherein the polyolefin succinic acid or anhydride is selected from polyisoprene succinic acid, polyisoprene succinic anhydride, polybutylene succinic acid, polybutylene succinic anhydride, polyisobutylene succinic acid, polyisobutylene succinic anhydride, polypropylene succinic acid, polypropylene succinic anhydride, polyalphaolefin succinic acid, polyalphaolefin succinic anhydride or a mixture or combination thereof, preferably wherein the polyolefin succinic acid or anhydride is polybutylene succinic acid, polybutylene succinic anhydride, polyisobutylene succinic acid or polyisobutylene succinic anhydride, more preferably wherein the polyolefin succinic acid or anhydride is polyisobutylene succinic acid or polyisobutylene succinic anhydride.

9. A method or process according to any preceding claim wherein the surfactant comprises the reaction product or mixture of:
a: 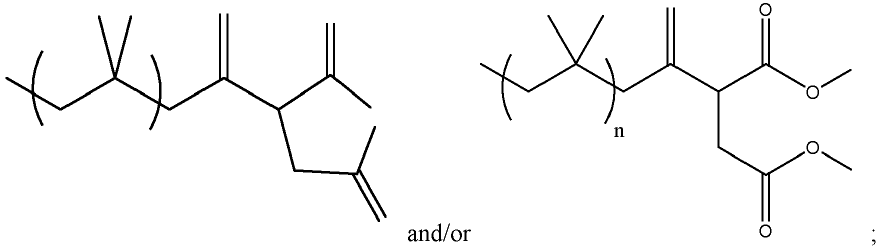
with b: one or more organic amines selected from 1-Piperazineethanamine, Tetraethylenepentamine (TEPA), polyamine (PAM), heavy polyamine (H-PAM), or mixtures thereof, preferably selected from Tetraethylenepentamine (TEPA), polyamine (PAM), or mixtures thereof; wherein n is a positive integer from 5 to 200, preferably from 10 to 100, more preferably from 12 to 90, even more preferably from 14 to 45, even more preferably still from 16 to 22, and further preferably from 17 to 21.

10. A method or process according to any preceding claim wherein the oil comprises or consists of one or more Group I base stocks, Group II base stocks, Group III base stocks and/or Group IV base stocks, preferably Group IV base stocks.

11. A method or process according to any preceding claim wherein the acidic gas separated from the gaseous mixture comprises, or is, carbon dioxide.

12. A method or process according to any preceding claim wherein the at least one organic base forms an internal phase in the oil, preferably wherein the surfactant forms a boundary layer between the organic base and the oil.

13. A method or process according to any preceding claim wherein the organic base is present in an amount of from 10% to 80%, preferably from 15% to 70%, more preferably from 20% to 60%, even more preferably from 25% to 55%, even more preferably still from 30% to 50% or from 30% to 40% by weight of the dispersion.

14. A method or process according to any preceding claim wherein the oil is present in an amount of from 10% to 90%, preferably from 20% to 80%, more preferably from 30% to 70%, even more preferably from 40% to 60% and even more preferably still from about 45% to about 55% by weight of the dispersion.

15. A method or process according to any preceding claim wherein the surfactant is present in an amount of from 0.1% to 10%, preferably from 0.5% to 9.5%, more preferably from 1% to 9%, even more preferably from 2% to 8%, even more preferably still from 3% to 7%, yet further preferably from 4% to 6% and yet further preferably still from 4.5% to 5.5%, by weight of the dispersion.

16. A method or process according to any preceding claim, the method or process further comprising one or more of the steps of:
a. removing the gaseous mixture from contact with or introduction to the dispersion,
b. transferring the dispersion to a desorber,
c. heating the dispersion, preferably to a temperature from 20 °C to 140 °C above the dispersion temperature when the gaseous mixture contacted the dispersion, more preferably to a temperature from 30 °C to 130 °C greater, even more preferably to a temperature from 40 °C to 120 °C greater, even more preferably still from 50 °C to 110 °C greater, and yet more preferably from about 60 °C to about 100 °C greater, to release the separated acidic gas;
d. reducing the pressure around the dispersion to release the separated acidic gas; and/or
e. contacting the dispersion with a purge gas to release the separated acidic gas, preferably wherein the purge gas comprises steam, nitrogen and/or air and more preferably in the case of the purge gas comprising nitrogen and/or air wherein the dispersion is contacted with the purge gas in combination with step c.;
after contacting the gaseous mixture with the dispersion.

17. A composition for separating acidic gases from a gaseous mixture comprising such acidic gases, the composition comprising a dispersion of at least one labile organic base in an oil, the organic base as defined in claim 1, and the dispersion further comprising at least one surfactant as defined in claim 1; preferably wherein the dispersion is further defined in accordance with any of claims 3 to 10 or 12 to 15.

18. A system for separating acidic gases from a gaseous mixture comprising such acidic gases, the system comprising a vessel with means for fluid introduction and removal, wherein the vessel contains a composition according to claim 17.

19. Use of a composition comprising a dispersion of at least one organic base as defined in claim 1 and an oil, the composition further comprising at least one surfactant as defined in claim 1, to separate acidic gases from a gaseous mixture containing such acidic gases.

20. Use according to claim 19, a system according to claim 18 or a composition according to claim 17, wherein the acidic gas separated from the gaseous mixture comprises, or is, carbon dioxide.

21. Use of a composition comprising a dispersion of at least one organic base as defined in claim 1 in an oil, the composition further comprising at least one surfactant as defined in claim 1, for the capture of carbon dioxide from a gaseous mixture comprising carbon dioxide.

22. Use according to any of claims 19 to 21 wherein the dispersion and/or composition is defined in accordance with any of claims 3 to 15.
